# EUROPEAN PATENT APPLICATION

(11) **EP 4 620 311 A1**
(43) Date of publication of application: **24.09.2025**
(21) Application number: 23901020.0
(22) Date of filing: 01.12.2023
(51) Int. Cl.: A23L 13/30, B65B 25/00, A23L 3/10

(54) **METHOD FOR PRODUCING RETORT FOOD BROTH COMPOSITION HAVING ENHANCED AROMA AND FLAVOR**

(30) Priority: 08.12.2022 KR 20220170904
(71) Applicant: CJ CheilJedang Corporation, Seoul 04560 (KR)
(72) Inventor: CHOI, Suhee, Seoul 04560 (KR); YOO, Da Som, Seoul 04560 (KR); SHIN, Sang Myung, Seoul 04560 (KR); KIM, Taehyeong, Seoul 04560 (KR)
(74) Representative: Meissner Bolte Partnerschaft mbB
(86) International application number: PCT/KR2023/019692
(87) International publication number: WO 2024/123001

(57) **Abstract**

Provided is a method of preparing a broth composition for retort foods, in which aroma components and flavor are enhanced, the method comprising a meat raw material pretreatment step (P); a pressurized hot water extraction step (S30) of performing pressurized hot water extraction of the meat raw material, which is pretreated in the pretreatment step (P), at a temperature of 90°C to 130°C for 1 hour to 4 hours; and a centrifugation step (S40) of centrifuging the broth extracted in the pressurized hot water extraction step (S30), thereby separating and filtering meat residue and fat.

## Description

### [Technical Field]

The present disclosure relates to a method of preparing a broth composition for retort foods.

### [Background Art]

One of the most important aspects of cooking is broth, which is a base of taste. Specifically, the flavor of a food is determined by a complex sensation that combines three elements, i.e., the smell, taste, and texture of the food in the mouth, and broth provides the basic elements that determine this flavor. Broth may be divided into meat broth based on various meat raw materials such as beef, pork, and chicken, etc., broth based on seafood raw materials such as shrimp, squid, octopus, clams, etc., and vegetable-based broth, etc.

Meanwhile, retort food generally refers to processed food that has been sterilized under pressure at a high temperature of 100°C or higher after being sealed in a pouch made of a special packaging material that is resistant to high temperature and high pressure and is storable in order to preserve cooked food under air- and light-blocked conditions for a long period of time. In today's busy society, retort products are becoming more popular with consumers because they have the advantages of being distributed and preserved at room temperature, unlike frozen products, and being easily cooked and eaten. There are various types of retort products, such as curry, jjajang, hamburger steak, meatballs, etc., and in addition, many broth-based soups, such as samgyetang, seolleongtang, budaejjigae, beef bone soup, etc., are also being developed as retort foods.

In the case of most traditional broth-based retort foods, pre-made meat enzymolysis broths or powdery seasoning raw materials are generally mixed with purified water, which is heated to be used as a broth substitute raw material. For example, Korean Patent No. KR 10-1936498 B1 discloses a method of preparing a retort food comprising a chicken breast broth fermented using an enzyme. As described, most broth raw materials for preparing retort foods are generally prepared through enzymolysis and concentration/drying processes. As a result, retort foods comprising the traditional commercially available raw materials, which finally undergo a sterilization process, have limitations of having a limited level of flavor and cost structure and appearance quality that is difficult to improve.

### [Disclosure]

### [Technical Problem]

A problem to be solved in the present disclosure is to provide a method of preparing a broth composition for retort foods, in which aroma components and flavor are enhanced, a broth composition prepared by the preparation method, and a method of preparing a broth-based retort food, in which aroma components and flavor are enhanced.

### [Technical Solution]

An object of the present disclosure is to provide a method of preparing a broth composition for retort foods, in which aroma components and flavor are enhanced, the method comprising a meat raw material pretreatment step (P); a pressurized hot water extraction step (S30) of performing the pressurized hot water extraction of the meat raw material, which is pretreated in the pretreatment step (P), at a temperature of 90°C to 130°C for 1 hour to 4 hours; and a centrifugation step (S40) of centrifuging the broth extracted in the pressurized hot water extraction step (S30), thereby separating and filtering meat residue and fat.

Another object of the present disclosure is to provide a method of preparing a broth-based retort food, in which aroma components and flavor are enhanced, the method comprising a meat raw material pretreatment step; a pressurized hot water extraction step of performing the pressurized hot water extraction of the meat raw material, which is pretreated in the pretreatment step, at a temperature of 90°C to 130°C for 1 hour to 4 hours; a centrifugation step of centrifuging the broth extracted in the pressurized hot water extraction step, thereby separating and filtering meat residue and fat; and a retort heating step of packaging a retort food composition comprising the centrifuged broth and sterilizing the same by retort heating.

Still another object of the present disclosure is to provide a broth composition for retort foods, in which aroma components and flavor are enhanced, prepared by the method of preparing the broth composition for retort foods.

### [Advantageous Effects]

A method of preparing a broth composition for retort foods provided in the present disclosure may provide a broth composition for retort foods with remarkably improved overall sensory qualities comprising appearance, savor, and flavor, since the broth composition has the improved preference for appearance by reducing the content of residual precipitate, comprises a pyrazine type compound upon retort heating, and has an overall increased content of taste-enhanced amino acids while having a reduced content ratio of bitter amino acids.

Accordingly, the broth composition for retort foods prepared by the preparation method of the present disclosure may have superior sensory qualities (flavor, appearance, off-taste/off-flavor level) even after retort heating sterilization at high temperature and high pressure, as compared to the prior art, thereby ultimately producing a variety of high-quality broth-based retort foods by applying the same.

### [Brief Description of the Drawing]

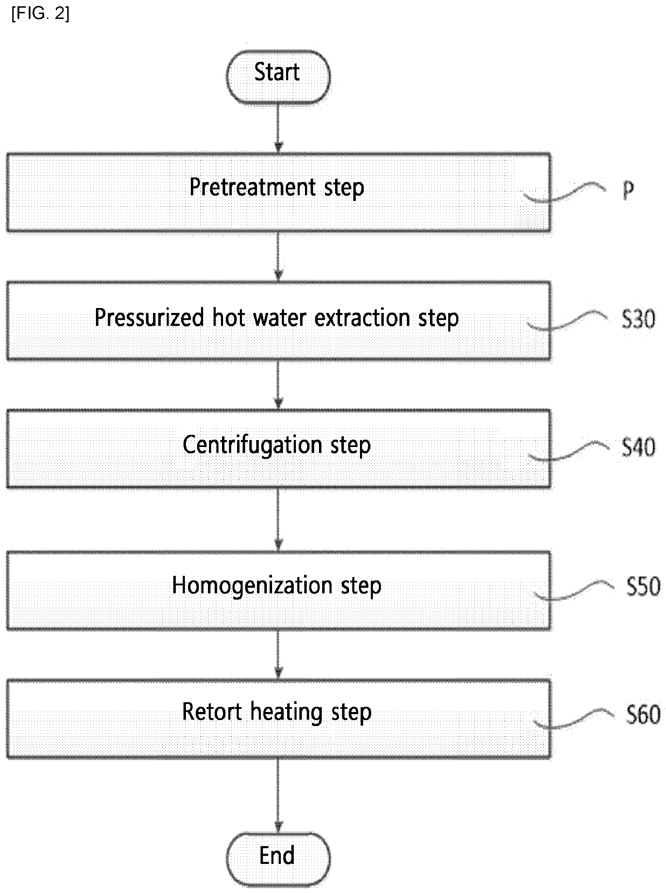

FIGS. 1 and 2 show the working steps according to one exemplary embodiment of the present disclosure, respectively;
FIG. 3 shows changes in the contents of major taste amino acids according to the extraction time of pressurized hot water extracts;
FIG. 4 shows changes in the contents of nucleic acids according to the extraction time of pressurized hot water extracts;
FIG. 5 shows changes in the contents of major taste amino acids according to the extraction temperature of pressurized hot water extracts;

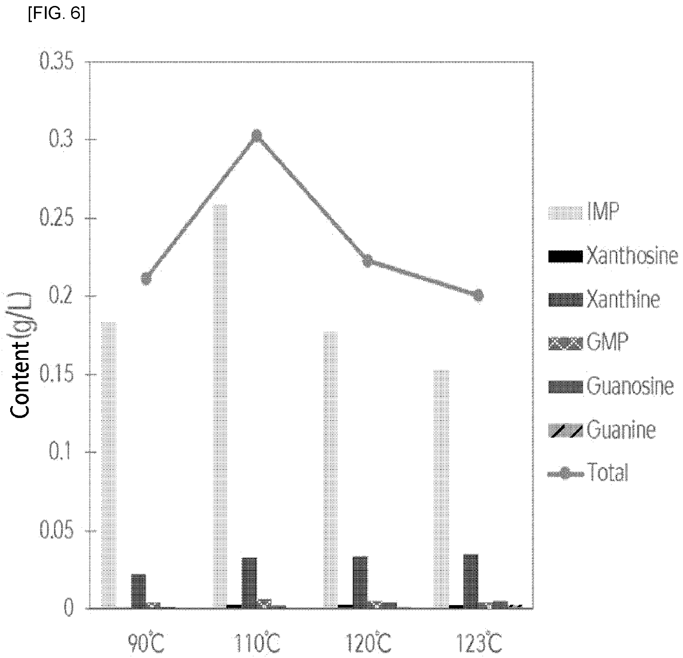

FIG. 6 shows changes in the contents of nucleic acids according to the extraction temperature of pressurized hot water extracts;
FIGS. 7 and 8 show broth preparation processes with different pretreatment processes and the resulting broths;
FIG. 9 shows composition ratios of taste amino acids in the pressurized hot water extract of the present disclosure and an enzymolysate as a comparative example; and
FIG. 10 shows composition ratios of taste amino acids in a beef pressurized hot water extract-applied seasoned broth and an enzymolysate-applied seasoned broth.

### [Detailed Description of Preferred Embodiments]

The present disclosure will be described in detail as follows. Meanwhile, each description and embodiment disclosed in this disclosure may also be applied to other descriptions and embodiments. That is, all combinations of various elements disclosed in this disclosure fall within the scope of the present disclosure. Further, the scope of the present disclosure is not limited by the specific description described below. Further, a number of papers and patent documents are referenced and cited throughout this specification. The disclosures of the cited papers and patent documents are incorporated herein by reference in their entirety to further clarify the level and scope of the subject matter to which the present disclosure pertains.

One aspect of the present disclosure provides a method of preparing a broth composition for retort foods, in which aroma components and flavor are enhanced, the method comprising a meat raw material pretreatment step (P); a pressurized hot water extraction step (S30) of performing the pressurized hot water extraction of the meat raw material, which is pretreated in the pretreatment step (P); and a centrifugation step (S40) of centrifuging the broth extracted in the pressurized hot water extraction step (S30), thereby separating and filtering meat residue and fat.

The method of preparing the broth composition for retort foods of the present disclosure may further comprise a homogenization step (S50) of mixing and heating the centrifuged broth with additives comprising a viscosity regulator, after the centrifugation step (S40).

Further, the method of preparing the broth composition for retort foods of the present disclosure may further comprise a retort heating step (S60) of packaging the centrifuged broth and sterilizing the same by retort heating, after the centrifugation step (S40).

As used herein, the term "retort food" refers to a processed food that has undergone a sterilization process in a high temperature and high pressure environment for the purpose of long-term storage, and is distributable at room temperature. For example, home meal replacement (HMR) may correspond thereto, but is not limited thereto, and any product may correspond thereto, as long as it is placed and sealed in a kind of container and requires sterilization for product sale.

The method of preparing the broth composition for retort foods of the present disclosure has a technical feature in that it may provide a broth composition, in which appearance, savor, and flavor are all improved, as compared to traditional broth compositions for retort foods.

As used herein, the "broth composition for retort foods" may be used interchangeably with a "meat-based extract for retort foods" or a "meat concentrate for retort foods", etc.

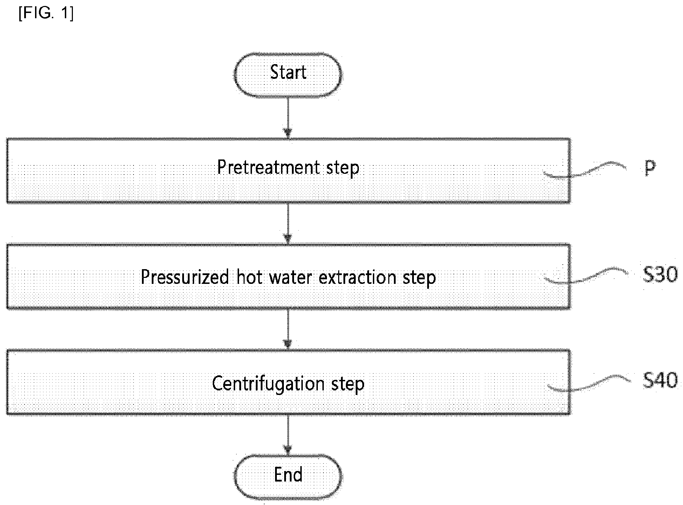

FIG. 1 is a flow chart showing the working steps according to one exemplary embodiment of the present disclosure.

Hereinafter, each step of the present disclosure will be explained in detail as follows.

The pretreatment step (P) is a step of removing foreign substances comprised in the meat raw material and making the meat raw material into an appropriate size for extracting the broth.

As used herein, the term "meat" refers to a type of meat of an edible animal. Specifically, the meat may be one or more meats selected from the group consisting of beef, beef bones, pork, pork bones, chicken, chicken bones, mutton and mutton bones, and preferably, beef.

The pretreatment step (P) may be a common pretreatment step applied in the broth preparation process, but may comprise, for example, a chopping step (S10).

The chopping step (S10) refers to a step of finely grinding the meat raw material to make the particle size small and uniform. Through this step, the meat particle size may be adjusted to an appropriate size for extraction.

Specifically, the pretreatment step (P) may optionally further comprise a selection step (S20) after the chopping step (S10). The selection step (S20) is a step of removing foreign substances mixed in the meat raw material, and is a step of removing inappropriate foreign substances comprising secondary foreign substances generated during the processing, such as discolored foreign substances, metallic foreign substances, human hair, vinyl, etc.

Further, the pretreatment step (P) may be specifically characterized by not comprising a blanching step or a bleeding step. In this regard, the blanching step means a process of briefly scalding meat in boiling water. In addition, the bleeding step means a process of removing blood from meat.

In one exemplary embodiment of the present disclosure, it was confirmed that when the pretreatment step comprising only the step of chopping and selecting the meat raw material without the blanching or bleeding process as a pretreatment process of the meat raw material is performed before the extraction step, the broth has the best quality and remarkably excellent flavor and taste due to the low content of residual precipitate. Furthermore, it was confirmed that the preference in appearance was high. Accordingly, the pretreatment step as above was selected.

The pressurized hot water extraction step (S30) refers to a process of extracting a liquid broth by applying pressure and heat to the pretreated meat raw material. In the method of preparing the broth composition for retort foods of the present disclosure, optimal pressurized hot water extraction conditions are established, thereby preparing a broth composition for retort foods, in which savor and flavor are improved, as compared to a broth for retort foods prepared through traditional enzymolysis and concentration/drying.

Specifically, the pressurized hot water extraction may be performed at 90°C to 130°C, more specifically, in a temperature range consisting of one lower limit selected from 90°C, 91°C, 92°C, 93°C, 94°C, 95°C, 96°C, 97°C, 98°C, 99°C, 100°C, 101°C, 102°C, 103°C, 104°C, 105°C, 106°C, 107°C, 108°C, 109°C, 110°C, 111°C, 112°C, 113°C, 114°C, 115°C, 116°C, 117°C, 118°C, 119°C, and 120°C, and/or one upper limit selected from 110°C, 111°C, 112°C, 113°C, 114°C, 115°C, 116°C, 117°C, 118°C, 119°C, 120°C, 121°C, 122°C, 123°C, 124°C, 125°C, 126°C, 127°C, 128°C, 129°C, and 130°C, and preferably, at 110°C to 125°C. In one exemplary embodiment of the present disclosure, it was investigated that when the pressurized hot water extraction is performed under the temperature conditions as described above, the content of nucleic acids in the broth is maintained during a subsequent retort heat treatment while generating pyrazine type compounds and reducing the content of bitter amino acids, and as a result, the savor and flavor may be improved.

In this regard, a step of concentrating the pressurized hot water extracted broth depending on the intended broth concentration may be optionally comprised, but is not limited thereto.

Specifically, the pressurized hot water extraction may be performed at a pressure of 1.5 kgf/cm² to 2.5 kgf/cm², and may be performed in a pressure range consisting of one lower limit selected from 1.5 kgf/cm², 1.6 kgf/cm², 1.7 kgf/cm², 1.8 kgf/cm², 1.9 kgf/cm², 2.0 kgf/cm² and 2.1 kgf/cm², and/or one upper limit selected from 1.8 kgf/cm², 1.9 kgf/cm², 2.0 kgf/cm², 2.1 kgf/cm², 2.2 kgf/cm², 2.3 kgf/cm², 2.4 kgf/cm², 2.5 kgf/cm², preferably, at a pressure of 1.7 kgf/cm² to 2.3 kgf/cm².

Specifically, the pressurized hot water extraction may be performed for 1 hour to 4 hours, and more specifically, for 2 hours to 3 hours.

In addition, the pressurized hot water extraction may be specifically performed in a multi-stage extraction process or a single extraction process, and preferably, it may be performed in a single extraction process.

Next, the centrifugation step (S40) refers to a step of filtering the extracted broth by separating meat residue and fat using a centrifuge. In this regard, only the broth, excluding the separated meat residue and fat, may be obtained and used.

Specifically, the centrifugation may be performed using a three-phase centrifuge. Through this centrifugation, the pretreated meat raw material is separated into three phases of meat, broth, and fat, thereby effectively controlling the fat content in the broth.

Specifically, the centrifugation may be performed at 2500 rpm to 4500 rpm, more specifically at 2500 rpm to 3500 rpm, but is not limited thereto.

Specifically, the centrifugation may be performed for 10 minutes to 30 minutes, more specifically for 15 minutes to 25 minutes, and more specifically for 22 minutes to 27 minutes, but is not limited thereto.

In addition, the centrifugation may be specifically performed under conditions of 10°C to 30°C, more specifically 15°C to 25°C, but is not limited thereto.

Next, the homogenization step (S50) refers to a step of heating a broth composition, in which the centrifuged broth is mixed with food additives.

Specifically, the food additives may comprise preservatives, sterilizers, antioxidants, dyes, coloring agents, bleaching agents, seasoning raw materials, sweeteners, spices, swelling agents, reinforcing agents, emulsifiers, thickeners, coating agents, gum base agents, foam inhibitors, solvents, and improving agents, etc. The additives may be selected depending on the type of retort food to be intended, and used in an appropriate amount. More specifically, the food additives may be seasoning raw materials and viscosity regulators.

Specifically, the homogenization step (S50) may be performed at 80°C to 100°C, and more specifically, at 80°C to 90°C.

Specifically, the homogenization step (S50) may be performed for 10 minutes to 60 minutes, and more specifically, for 20 minutes to 50 minutes.

In this regard, the salinity of the homogenized broth may be 0% to 15%, and more specifically, 0% to 7%, 3% to 10%, 5% to 12%, 9% to 15%, or 2% to 13%, but is not limited thereto. In this regard, the sugar content of the homogenized broth may be 35 Brix to 60 Brix, and more specifically, 40 Brix to 55 Brix, 35 Brix to 50 Brix, 45 Brix to 60 Brix, or 40 Brix to 60 Brix, but is not limited thereto.

The retort heating step (S60) refers to a step of packaging the centrifuged broth or the broth that has optionally undergone the homogenization step and sterilizing the same by retort heating.

As used herein, the term "sterilization by retort heating" refers to packing a packaging material with a pre-made food and sealing the same, and killing microorganisms by heating sterilization at a high temperature for preservation for a long period of time.

Specifically, in the present disclosure, the packaging material used for the packaging is not limited as long as it is a material that is suitable for retort and has heat resistance to high temperatures, light- and oxygen-blocking properties, and flexibility, but the packaging material may be, for example, polyethylene, polypropylene, aluminum or nylon, etc., and may be a single-layer film or a multilayered packaging material.

Specifically, the retort heating step (S60) may be to perform heating sterilization with an F0 value of 4 or higher. In this regard, the F0 value means F value when the heating reference temperature during retort heating is 121°C, and the F value means a calculated value that corresponds to the cumulative sterilization effect obtained during the retort sterilization process, which is equivalent to the sterilization effect achieved by heating for a certain number of minutes at a reference temperature.

Specifically, the retort heating step (S60) may be performed at 90°C to 125°C, more specifically in a temperature range consisting of one lower limit selected from 95°C, 96°C, 97°C, 98°C, 99°C, 100°C, 101°C, 102°C, 103°C, 104°C, 105°C, 106°C, 107°C, 108°C, 109°C, 110°C, 111°C, 112°C, 113°C, 114°C and 115°C, and/or one upper limit selected from 113°C, 114°C, 115°C, 116°C, 117°C, 118°C, 119°C, 120°C, 121°C, 122°C, 123°C, 124°C, and 125°C, and preferably, at 115°C to 123°C.

Specifically, the retort heating step (S60) may be performed for 10 minutes to 60 minutes, and more specifically, for 10 minutes to 40 minutes.

Another aspect of the present disclosure provides a method of preparing a broth-based retort food, in which aroma components and flavor are enhanced, the method comprising a meat raw material pretreatment step; a pressurized hot water extraction step of performing the pressurized hot water extraction of the meat raw material, which is pretreated in the pretreatment step; a centrifugation step of centrifuging the broth extracted in the pressurized hot water extraction step, thereby separating and filtering meat residue and fat; and a retort heating step of packaging a retort food composition comprising the centrifuged broth and sterilizing the same by retort heating.

In this regard, the pretreatment step, the meat, the pressurized hot water extraction step, the centrifugation step, and the retort heating step are as described above.

In this regard, the retort food composition may further optionally comprise appropriate solid ingredients according to the type of retort food to be intended, and non-limiting examples of the solid ingredients may comprise seafood, mushrooms, meat, noodles, and vegetables, etc., but are not limited thereto.

In this regard, the retort food composition may further comprise purified water in an appropriate amount according to the concentration of the retort food to be intended.

The retort food is not limited as long as it is a broth-based retort food comprising the broth composition for retort foods, but may be specifically a type of broth-based soup or stew, and more specifically, one or more selected from the group consisting of chicken gomtang, samgyetang, dogani-tang, seolleongtang, beef bone soup, galbitang, seaweed soup, radish soup, yukgaejang, and tteokguk, but is not limited thereto.

Still another aspect of the present disclosure provides a broth composition for retort foods, in which aroma components and flavor are enhanced, prepared by the method of preparing the broth composition for retort foods.

In one exemplary embodiment of the present disclosure, it was confirmed that the broth composition for retort foods prepared by the preparation method of the present disclosure generates, after retort heating, pyrazine type compounds which are aroma components of cooked meat, not comprised in traditional broth compositions for retort foods, and it was also confirmed that a content ratio of bitter amino acids in the total content of taste amino acids is less than 70%. Further, since the content of residual precipitate of the present disclosure was remarkably improved, as compared to traditional broth compositions, the above results confirmed that the broth composition for retort foods of the present disclosure may provide remarkably improved appearance, savor, and flavor.

Specifically, the broth composition for retort foods may comprise pyrazine type compounds.

As used herein, the term "pyrazine type" compound is a heterocyclic aromatic compound having nitrogen generated in the Maillard reaction, and is known as an ingredient that exerts savory effects when food is heated. The broth composition for retort foods of the present disclosure may generate pyrazine type compounds during retort heating to enhance the positive aroma components of meat. For example, the pyrazine type compound may be methyl pyrazine, 2,3-dimethylpyrazine, 2,5-dimethylpyrazine, 2,6-dimethylpyrazine, 2-ethenyl-6-methyl pyrazine, or 3-ethyl-2,5-dimethyl-pyrazine, but is not limited thereto.

Specifically, the broth composition for retort foods may have a ratio of bitter amino acids of less than 70%, more specifically, less than 60%, and even more specifically, less than 50% in the total content of taste amino acids.

As used herein, the term "taste amino acids" refers to amino acids that exhibit sour, sweet, salty, bitter, and savory tastes. Taste amino acids are major taste ingredients that impart umami and a meat flavor to a broth, and serve as an important quality index indicating that the taste quality is improved as the contents thereof increase. Among the taste amino acids, aspartic acid and glutamic acid are known as amino acids that impart umami and a sour taste, while serine, glycine, alanine, proline, threonine, etc. are known as sweet amino acids that produce a sweet taste, and cysteine, leucine, tyrosine, phenylalanine, histidine, lysine, methionine, valine, arginine, isoleucine, etc. are known as bitter amino acids that have the property of producing a bitter taste.

More specifically, the broth composition for retort foods may have a ratio of the sum of the contents of bitter amino acids, leucine, tyrosine, phenylalanine, histidine, lysine, methionine, valine, arginine, and isoleucine, of less than 70%, more specifically less than 60%, and even more specifically less than 50% in the total content of taste amino acids. For example, the ratio of bitter amino acids in the total content of taste amino acids may be 0% or more and less than 50%, or 0% or more and less than 45%.

Specifically, the content of residual precipitate in the broth composition for retort foods may be less than 0.3%, more specifically less than 0.2%, and even more specifically less than 0.1%. The residual precipitate is a major factor that greatly affects the preference for the appearance of broth, and the broth composition for retort foods of the present disclosure may exhibit improved appearance by remarkably reducing the content of residual precipitate, as compared to traditional broth compositions.

In addition, the broth composition for retort foods may further comprise a physiologically acceptable carrier, and the type of the carrier is not particularly limited, and any carrier may be used as long as it is commonly used in the relevant technical field.

In addition, the broth composition for retort foods may comprise additional components that may enhance smell, taste, visual appearance, etc., which are commonly used in broth compositions. For example, it may comprise vitamin A, C, D, E, B1, B2, B6, B12, niacin, biotin, folate, pantothenic acid, etc. In addition, it may comprise minerals such as zinc (Zn), iron (Fe), calcium (Ca), chromium (Cr), magnesium (Mg), manganese (Mn), copper (Cu), chromium (Cr), etc.; and amino acids such as lysine, tryptophan, cysteine, valine, etc.

In addition, the broth composition for retort foods may comprise food additives such as a preservative (potassium sorbate, sodium benzoate, salicylic acid, sodium dehydroacetate, etc.), a sterilizer (bleaching powder, high-grade bleaching powder, sodium hypochlorite, etc.), an antioxidant (butyl hydroxyanisole (BHA), butyl hydroxytoluene (BHT), etc.), a dye (tar pigment, etc.), a coloring agent (sodium nitride, sodium nitrate, etc.), a bleaching agent (sodium sulfite), a flavor enhancer (MSG, monosodium glutamate, etc.), a sweetener (dulcin, cyclamate, saccharin, sodium, etc.), a spice (vanillin, lactone, etc.), a swelling agent (alum, potassium D-bitartrate, etc.), a reinforcing agent, an emulsifier, a thickening agent (paste), a coating agent, a gum base agent, a foam inhibitor, a solvent, an improving agent, etc. The additives may be selected according to the type of food and may be used in an appropriate amount.

Still another aspect of the present disclosure provides use of the broth composition, which is prepared by the method of preparing the broth composition for retort foods, in producing retort foods.

Still another aspect of the present disclosure provides a broth-based retort food, in which aroma components and flavor are enhanced, prepared by the method of preparing retort foods.

### [Mode for Carrying Out the Invention]

Hereinafter, the present disclosure will be described in more detail with reference to exemplary embodiments. However, these exemplary embodiments are for more specifically explaining the present disclosure, and the scope of the present disclosure is not intended to be limited by these exemplary embodiments.

### Preparation Example 1: Preparation of beef pressurized hot water extract

Australian beef (95CL shank) as a beef raw material was chopped into a size of 8 mm and used in all experiments. The beef raw material was extracted by heating with purified water (twice the amount of the raw beef) in a pressurized extractor according to specific extraction conditions of each exemplary embodiment, and each extract was passed through a 100-mesh filter to prepare a final pressurized hot water extract.

### Comparative Example 1: Preparation of beef enzymolysate

As a comparative example, beef enzymolysate was prepared by enzymolysis. The beef enzymolysate was heated at 95°C for 15 minutes for the purpose of bleeding and boiling according to a preparation method generally known, the liquid phase was removed, and the remaining boiled meat was used in the next experiment. The boiled meat was subjected to enzymolysis at 50°C and 110 rpm for 2 hours by adding a predetermined ratio of purified water and proteolytic enzymes, protease and flavourzyme, respectively. Thereafter, the proteolytic enzymes were inactivated through heat treatment at 95°C to 100°C for 10 minutes to 15 minutes, and the two types of inactivated enzymolysates were filtered through a 100-mesh filter to prepare final control samples.

### Example 1: Verification of Optimal Pressurized Hot Water Extraction Conditions for Beef Broth Base

Purified water (twice the amount of raw material) was added to beef ground meat, and extraction was performed at 120°C for 2 hours to 6 hours for different extraction times, and 100 mesh filtration was performed to prepare extracts according to temperatures. The content of amino acids and the content of nucleic acids were examined for the extracts to verify the optimal extraction time.

### Example 1-1 : Analysis of taste components according to time of pressurized hot water extraction of beef broth base

First, analysis of the taste components (amino acids, nucleic acid-related substances) was examined in the following manner. The amino acid analysis of the beef broth extract was performed using a high-performance liquid chromatography (Hitachi L-8900). A Hitachi ion exchange column (Hitachi) was used and a UV detector was used to perform measurement at 440 nm and 560 nm. Analysis was performed using MCI Buffer L-8500-PH kit as a mobile phase at a flow rate of 0.4 ml/min.

The content of nucleic acid-related substance in the beef broth extract was analyzed using a high-performance liquid chromatography (Shimadzu LC-30D). A Capcell Pak C18 ACR (3 µm, φ 4.6 mm x 150 mm) HPLC column was used and a UV detector was used to perform measurement at 254 nm. Analysis was performed using 10 g of ammonium dihydrogen phosphate + 1 g of tetrabutylammonium phosphate monobasic: 108 ml/5 L of acetonitrile + 5000 ml of distilled water (pH 2.4 by H₃PO₄) as a mobile phase at a flow rate of 1.0 ml/min.

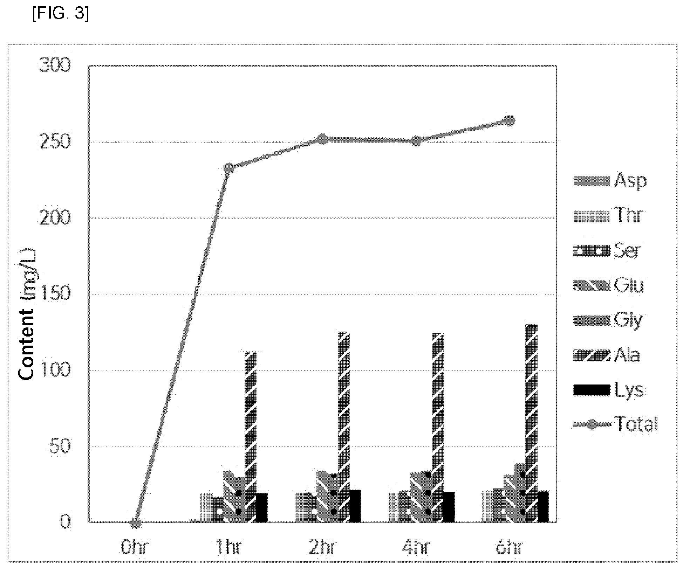

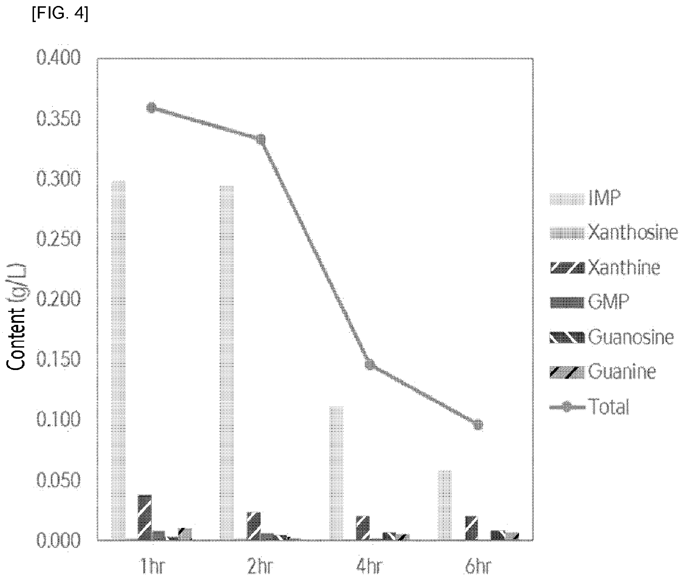

According to the experimental process described above, the contents of the taste amino acids and nucleic acids in the beef pressurized hot water extracts prepared under different extraction time conditions (Example 1 and Comparative Example 1) were compared, and the results are shown in FIGS. 3 and 4, respectively.

First, as confirmed in FIG. 3, the contents of major taste amino acids (Asp, Thr, Ser, Glu, Gly, Ala, Lys) of the beef extract increased rapidly from 1 hour after the start of extraction, and no significant increase in the contents of taste amino acids was observed until 4 hours or more as the extraction time increased. The content of amino acids increased when extracted for 6 hours or more. However, the sensory burnt and bitter tastes developed, and it was judged that the tastes had a negative effect on the broth taste, and therefore, extraction for 6 hours or more was excluded from the appropriate extraction time. With regard to nucleic acids and nucleic acid byproducts, it was confirmed that the content of IMP, GMP, etc. decreased by degradation due to low thermal stability as the extraction time was longer (FIG. 4). In particular, it was confirmed that when pressurized extraction was performed for 4 hours or more, the content of nucleic acids decreased rapidly.

Accordingly, from the results, the pressurized hot water extraction time was preferably determined as 1 hour to 6 hours, and more preferably, 1 hour to 4 hours, which significantly increased the content of taste amino acids while maintaining the content of nucleic acids.

### Example 1-2: Analysis of taste components according to temperature of pressurized hot water extraction of beef broth base

Next, it was attempted to analyze the optimal high-temperature pressure treatment temperature for the beef broth extract. Purified water (twice the amount of raw material) was added to beef ground meat, and extraction was performed at 70°C to 123°C for 1 hour, followed by 100-mesh filtration. The content of amino acids and the content of nucleic acids were examined for the extracts to verify the optimal extraction time.

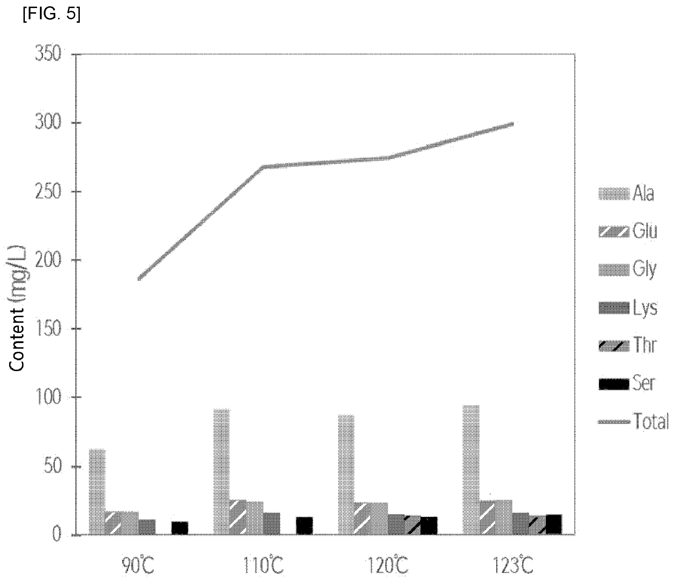

Analysis of the taste components (amino acids, nucleic acid-related substances) was performed in the same manner as Example 1-1, except that the extraction time was fixed and the extraction temperature was varied, and the results are shown in FIG. 5.

As a result of extracting the beef ground meat at 70°C, the meat was not fully cooked and the broth was bloody, and thus it was determined that the extract was unusable in terms of sensory evaluation, and thus the temperature was excluded from appropriate temperature conditions. As shown in FIG. 5, as the temperature increased from 90°C to 123°C, the contents of major taste amino acids such as alanine, glutamic acid, glycine, and threonine, etc., which impart positive taste quality to beef broth, showed an increasing trend, and in particular, there was no significant difference in the contents of taste amino acids within the temperature range of 110°C to 123°C. With regard to nucleic acids and nucleic acid byproducts, it was confirmed that the contents of IMP, GMP, etc. decreased due to low thermal stability as the extraction temperature increased.

Accordingly, from the results, the pressurized hot water extraction temperature was preferably determined as 100°C to 125°C, and more preferably, 110°C to 125°C, which significantly increased the content of amino acids while increasing the content of nucleic acids.

In conclusion, from the above results, the optimal pressurized hot water extraction conditions for obtaining high-quality beef hot water extracts through maximizing the extraction of taste amino acids were determined as 1 hour to 6 hours or less, more preferably 1 hour to 4 hours or less, based on a high temperature of 110°C or higher. In addition, in the case of beef extracts, the content of nucleic acids, which are components that impart umami derived from beef raw materials, decreases during the extraction process due to the low thermal stability of nucleic acids. However, this is an inevitable phenomenon for maximizing the extraction of taste amino acids under high temperature and high pressure conditions, and it may be supplemented by additionally mixing with nucleic acid-derived seasoning materials when applied to beef extract-based processed foods in the future.

### Example 2: Analysis of Pretreatment Process Design

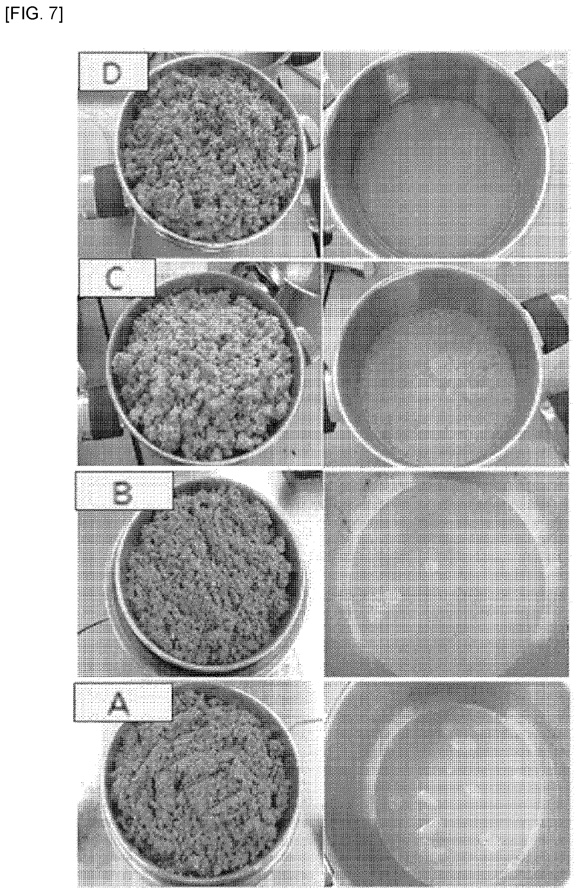

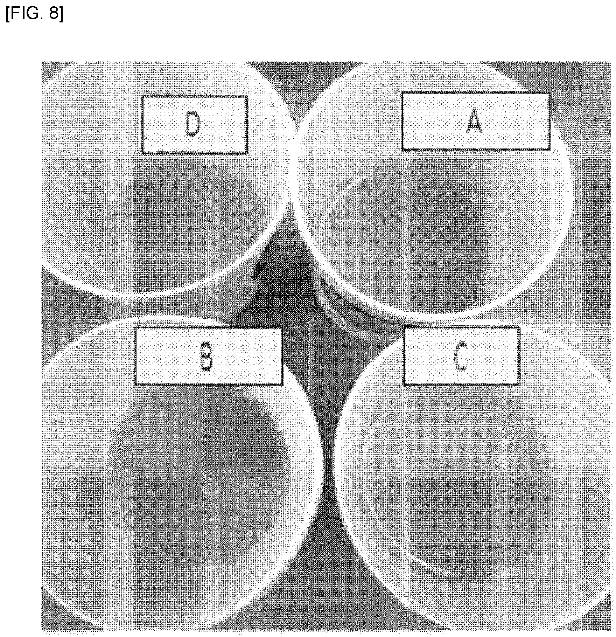

Next, in order to analyze the optimal pretreatment conditions, the broth sensory evaluations such as broth Brix and broth flavor intensity were conducted by varying the conditions of the pretreatment step, and the process and each broth prepared are shown in FIGS. 7 and 8, and the results are shown in Table 1 below.

**[Table 1]**

| **Sort** | **Pretreatment process** | **Brot h Brix** | **Broth flavor intensity** | **Note** |
|---|---|---|---|---|
| A | Hot water blanching→Chopping→Extracting | 6.0 | 3 | better than B in terms of blood taste and savory taste |
| B | Chopping→Hot water blanching→Extracting | 6.0 | 2 | lower flavor intensity than A |
| C | Cold water bleeding→Chopping →Extracting | 5.2 | 1 | weakest taste/flavor intensity, best bleeding degree |
| D | Chopping→Selecting→Extracting | 7.0 | 4 | best overall taste quality, excellent meat flavor/taste |
| *[The stronger the flavor intensity, the higher the score (0 point: water)]* | | | | |

As shown in Table 1, the pretreatment process of extracting after chopping and selecting was the best in terms of broth Brix and flavor intensity (sensory). In the pretreatment process of extracting after chopping, bleeding was not performed, and thus the blood taste was comprised, but this did not have a negative effect on the taste, and as a result, it was evaluated as the best broth taste.

Therefore, based on these results, the process of extracting the meat raw material after chopping was selected as the pretreatment process when preparing the beef pressurized hot water extract.

### Example 3: Analysis of Extraction Effect according to Multi-Stage Extraction Process

Next, in order to determine whether the beef pressurized hot water extraction of the present disclosure proceeds with a multi-stage extraction process, analysis of the extraction effects, i.e., specifically, analysis of the broth Brix and flavor intensity (sensory) and analysis of the contents of major taste amino acids was performed according to the number of extractions under the same conditions (118°C, 2 bar) such as the total extraction time, etc., and shown in Table 2 and Table 3, respectively.

**[Table 2]**

| **Number of extraction** | **Pressurized extraction** | **Input amount** | **Total yield%** | **Broth Brix** |
|---|---|---|---|---|
| 1 | 4 hr | Meat 1: Purified water 2 | 74.27 | 3.0 |
| 2 | 2+2 hr | Meat 1: Purified water 2 | 75.27 | 3.0 |

**[Table 3]**

| mg/L | Total | Ala | Glu | Gly | Lys | Thr | Ser |
|---|---|---|---|---|---|---|---|
| 4h pressurized extraction | 218.9 | 109.9 | 29.2 | 31.5 | 15.2 | 15.8 | 17.4 |
| 2+2h pressurized extraction | 209.9 | 102.5 | 28.8 | 31.2 | 14.9 | 15.5 | 17.0 |

As shown in Table 2, it was confirmed that there is no significant difference in the broth Brix and flavor intensity (sensory) according to the number of extractions. In addition, as shown in Table 3, the results of the comparative data analysis of the contents of taste amino acids showed that the contents of amino acids were slightly higher in the case of extracting once for 4 hours than in the case of extracting twice (2+2h).

Accordingly, from the results, it was decided to proceed with a single extraction process rather than a multi-stage extraction process, considering the flavor and the contents of taste components of the beef extract and the efficiency of the production process.

### Example 4 : Verification of superiority of beef pressurized hot water extract

Next, a heat-resistant pouch for retort made of a multilayer film, such as polypropylene, aluminum, and nylon, etc., was packed with each of the beef pressurized hot water extract and the beef enzymolysates prepared in Preparation Example 1 and Comparative Example 1, which was then packaged, and heat sterilization was treated at 105°C to 123°C for 10 minutes to 60 minutes to perform comparative analysis of each quality index.

### Example 4-1: Analysis of taste components

First, analysis of taste components was performed for the beef pressurized hot water extract and the enzymolysates in the same manner as in Example 1.

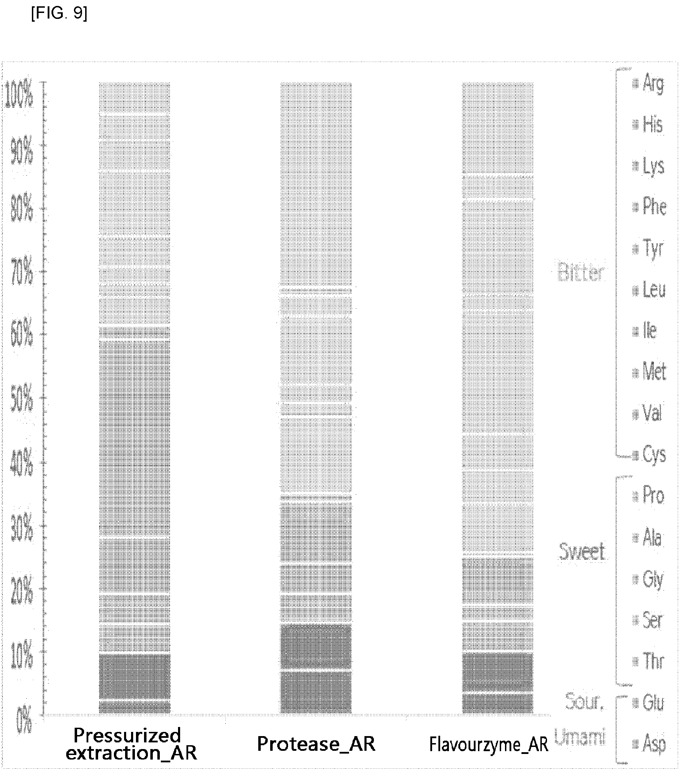

The results of the comparative analysis of the ratios of taste amino acids in the beef pressurized hot water extracts and two types of enzymolysates are shown in FIG. 9.

As shown in FIG. 9, the composition of taste amino acids of the beef pressurized hot water extract had a higher ratio of umami and sour amino acids (9.82%) and sweet amino acids (51.56%) than bitter amino acids (38.62%), whereas the amino acid composition of the beef enzymolysate had mainly bitter amino acids (protease-applied enzymolysate of 64.95%, flavourzyme-applied enzymolysate of 75.03%). These results indicate that the beef pressurized hot water extraction method may reduce the amount of bitter amino acids and may significantly increase the ratio of umami and sour amino acids, as compared to other extraction methods. These amino acid analysis results are also consistent with the actual sensory evaluation results of the beef pressurized hot water extract and enzymolysate below.

### Example 4-2: Analysis of volatile aroma components

Next, it was intended to analyze the volatile aroma components of beef extracts before and after retort heat treatment. The same analysis was performed on the beef pressurized hot water extract and enzymolysates.

The aroma components of each sample were extracted using solid phase microextraction (SPME), and a fiber coated with 50/30 µm divinylbenzene/carboxen/polydimethylsiloxane was used. 1 g of the sample was placed in a 20 ml headspace bottle and sealed with a Teflon cap. After inserting the SPME fiber into the sample, extraction of volatile aroma components was performed at 60°C for 30 minutes.

The identification of the volatile aroma components of each sample was performed using an Agilent 7890 GC/ 5977B mass selective detector and an Agilent 122-13341UI column. After maintaining at the oven temperature of 40°C for 5 minutes, the temperature was raised to 250°C at a rate of 8°C/min and maintained for 5 minutes. The injector temperature was 250°C, the detector temperature was 280°C, helium gas was used as a mobile phase, and the flow rate was set to 1 ml/min. The analysis of volatile aroma components was performed in three replicates. The results of GC-MS analyses of volatile aroma components before and after heat treatment of the beef pressurized hot water extract (Table 4), protease enzymolysate (Table 5), and flavourzyme enzymolysate (Table 6), performed through the process, are shown in Tables 4 to 6, respectively.

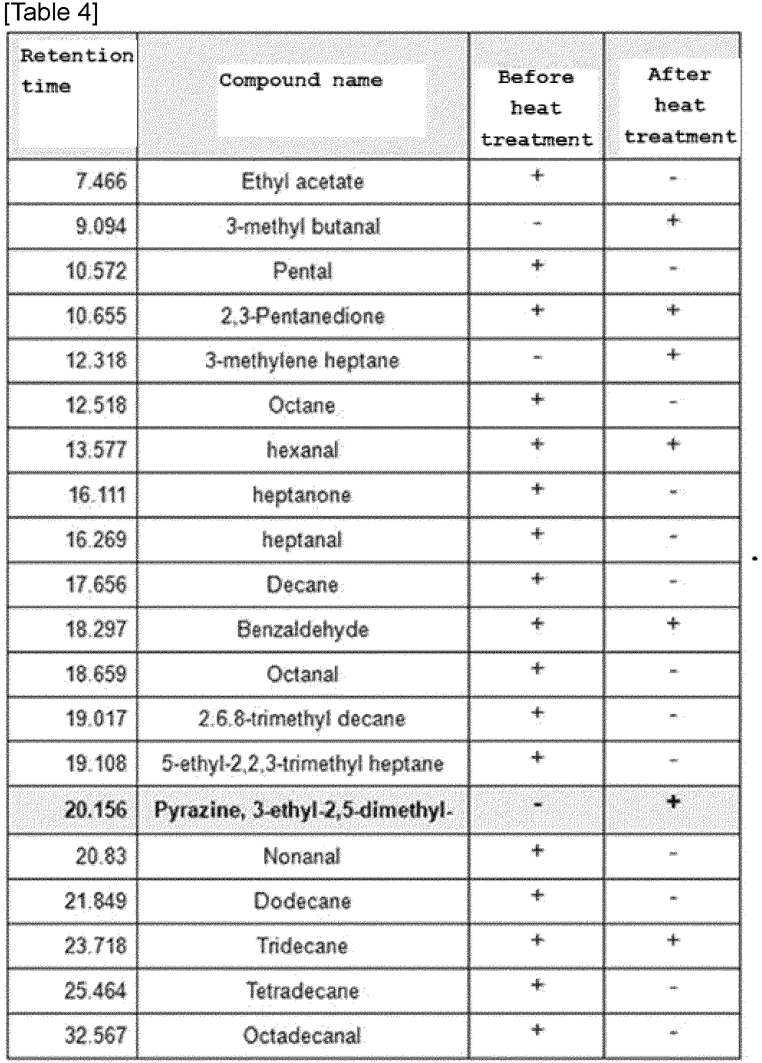

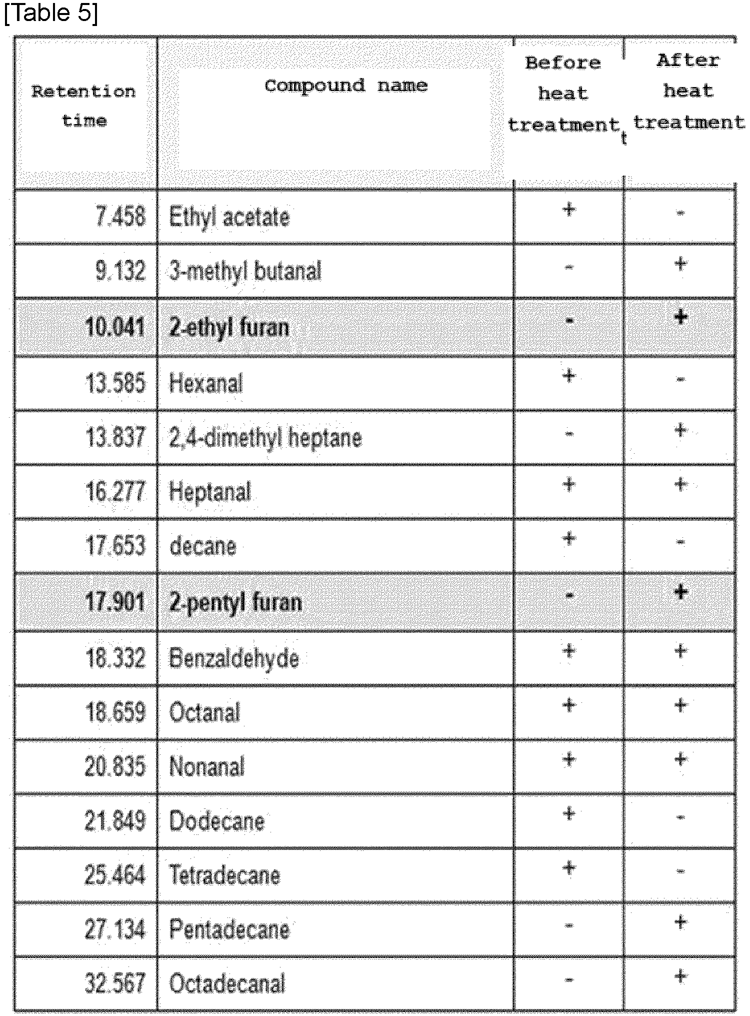

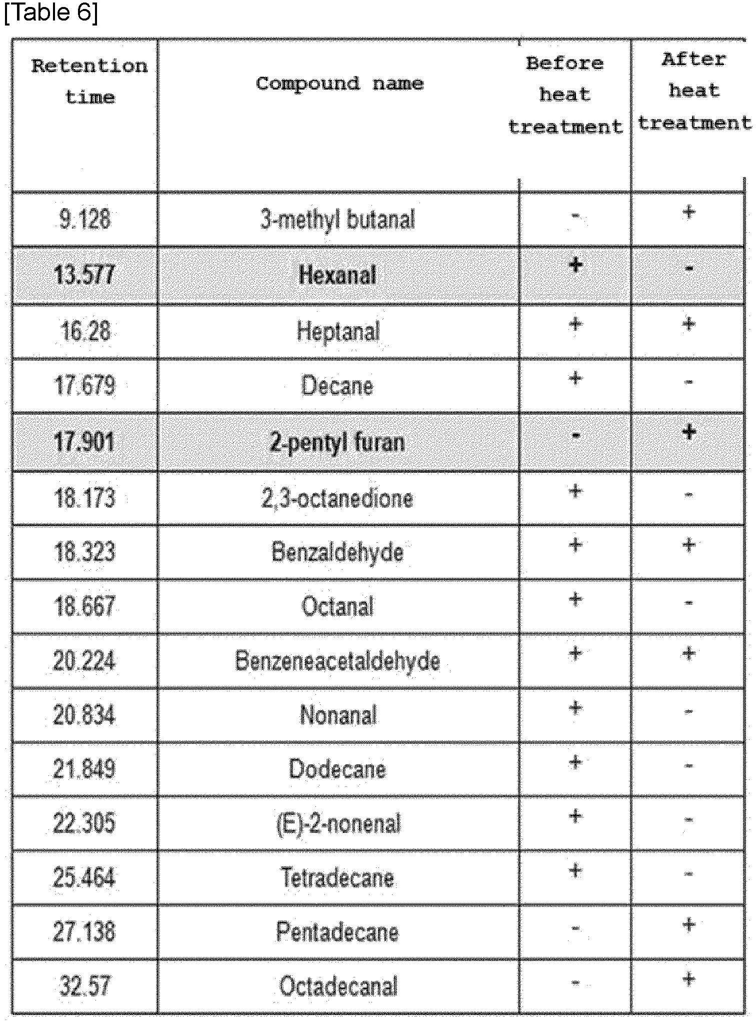

As confirmed in Table 5 and Table 6, after heat treatment of the beef enzymolysate, furan-type compounds (2-pentyl-furan, 2-ethyl-furan) were generated, which are known to cause retort and processing odor, and heptanal levels increased, which may be considered indicators of beef fat oxidation. In contrast, as shown in Table 4, after heat treatment of the beef pressurized hot water extract, furan-type compounds were not generated, heptanal levels decreased, and pyrazine compounds (3-ethyl-2,5-dimethyl-pyrazine) increased, which may be considered positive aroma components of cooked beef. In particular, it was confirmed that the degree of reduction in off-taste/off-flavor was superior, compared with the enzymolysates(enzymatic hydrolysates) prepared using protease, which is more commonly used considering the unit price of raw materials, etc.

Accordingly, these results confirmed that when retort heat treatment is performed, furan-type compounds and heptanals were not generated or rather decreased, and pyrazine-type compounds were increased in the beef pressurized hot water extract, compared to enzymolysates, and therefore, the beef pressurized hot water extract has the excellent effect of enhancing aroma components by retort heat treatment, thereby being suitable for use in preparing retort foods.

### Example 4-3: Analysis of residual precipitate content

The measurement of the content of residual precipitate in the beef pressurized hot water extract and each of the beef enzymolysates (protease, flavourzyme) was conducted as follows. Each sample was centrifuged at 3500 rpm and 20°C for 20 minutes to precipitate the residue, and the supernatant was removed to harvest the precipitated residue. The harvested residue was dried in a drying oven at 95°C for 20 minutes, and the weight of the final residual precipitate was measured. The comparison of the content of residual precipitate was conducted in three replicates, and the results are shown in Table 7 below.

**[Table 7]**

| Section | Content ratio of residue (%) |
|---|---|
| Beef pressurized hot water extract | 0.07% |
| Protease enzymolysate | 0.62% |
| Flavourzyme enzymolysate | 0.45% |

The content of residual precipitate is a major factor that greatly affects the appearance preference of the broth. As shown in Table 7, the content of residual precipitate of the beef enzymolysate was 6 to 9 times higher than that of the beef pressurized hot water extract of the present disclosure.

Accordingly, these results confirmed that the beef pressurized hot water extraction method of the present disclosure may be usefully used to prepare a broth with improved appearance by significantly reducing the content of residual precipitate.

### Example 5: Analysis of Quality of Beef Base-Applied Products

Finally, it was intended to analyze the quality of broths and retort products prepared using the beef base.

### Example 5-1: Preparation of beef base composition-applied seasoned broth

Seasoning ingredients (refined salt, I+G) and a viscosity regulator (dextrin) were added to the beef pressurized hot water extract and the enzymolysates prepared in Example 1, thereby preparing seasoned broths with the same salinity and Brix.

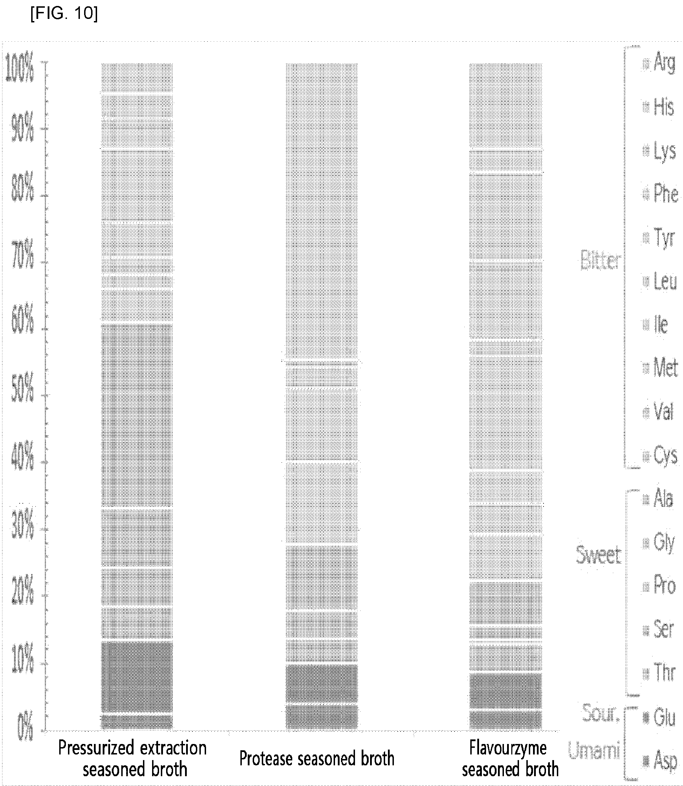

The analysis of taste components (amino acids, nucleic acid-related substances) was performed in the same manner as in Example 1-1 for the seasoned broths, to which the beef pressurized hot water extract and the enzymolysate were each applied, and the results are shown in FIG. 10.

In addition, the identification of volatile aroma components of each seasoned broth was performed in the same manner as in Example 2-2, and the results are shown in Tables 8 to 10.

As shown in FIG. 10, the results of comparing the composition ratios of taste amino acids in the seasoned broth to which the beef pressurized hot water extract was applied, and the seasoned broth to which the enzymolysate was applied showed that the composition of taste amino acids of the seasoned broth to which the beef pressurized hot water extract was applied had a higher ratio of umami and sourness-related substances (13.47%) and sweetness-related substances (47.43%) than bitterness-related substances (39.10%), whereas the composition of amino acids of the seasoned broth to which the beef enzymolysate was applied mainly had bitterness-related substances (72.26% in the protease-applied enzymolysate, 77.63% in the flavourzyme-applied enzymolysate). These results were also consistent with the actual sensory evaluation results of the seasoned broths to which the beef pressurized hot water extract and the enzymolysates were each applied.

Next, as shown in Tables 8 to 10, it was confirmed that pyrazine type compounds, which are aroma components, were generated in the seasoned broth to which the pressurized extract was applied, and the content thereof actually increased after retort heat treatment. In contrast, in the seasoned broth to which the enzymolysate was applied, the generation of pyrazine type compounds as above was not observed at all, and furan type compounds were generated.

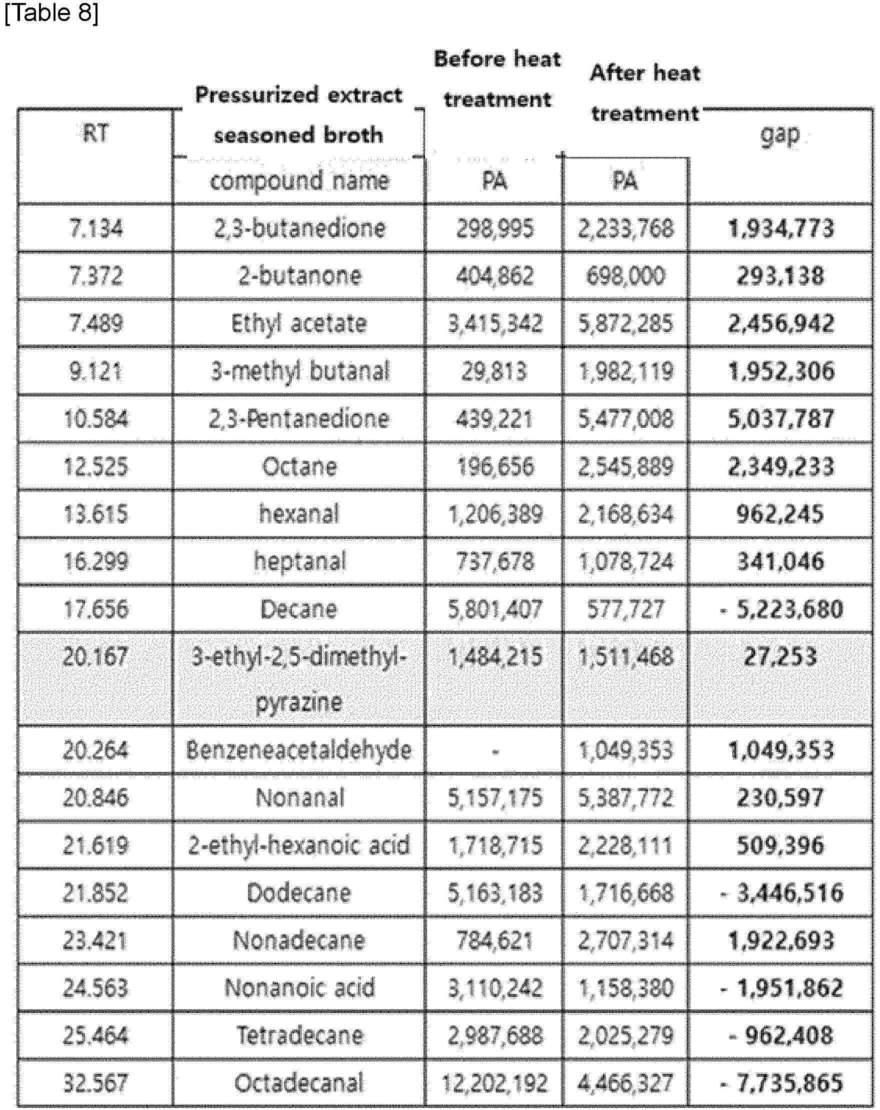

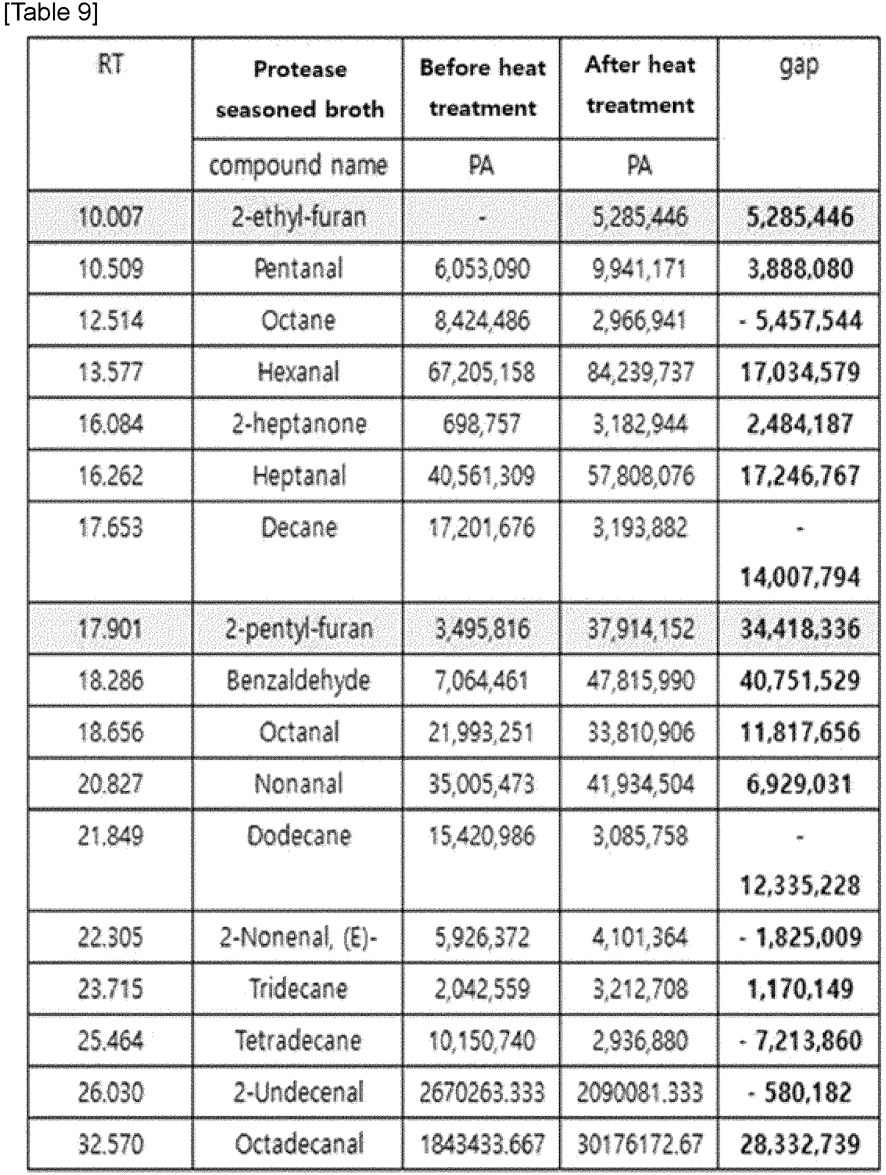

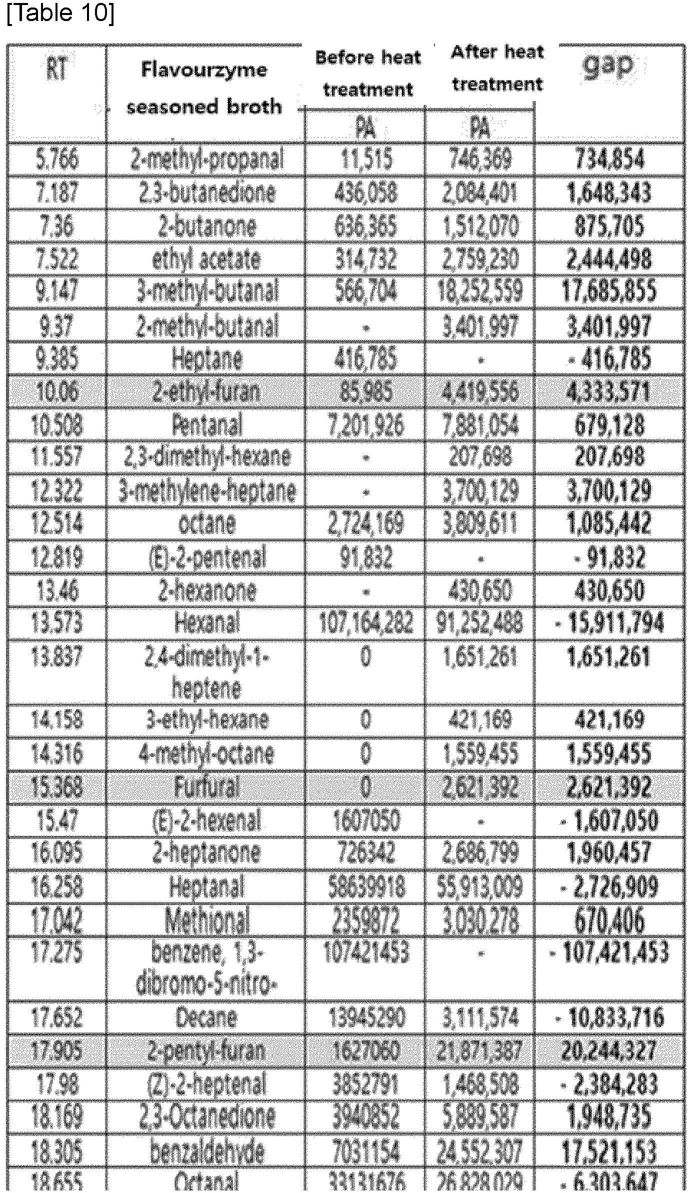

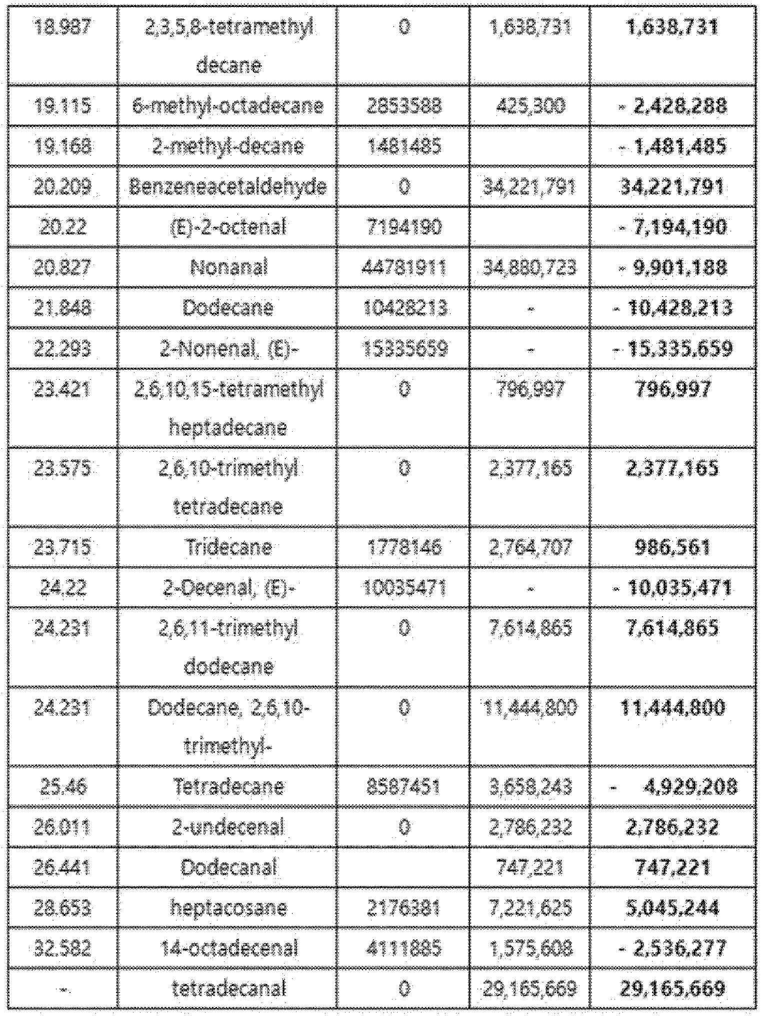

The results of the above exemplary embodiments indicate that it is possible to prepare a broth-based retort food with improved taste components and aroma components and improved overall sensory quality by using the beef pressurized hot water extract of the present disclosure.

Based on the above description, it will be understood by those skilled in the art that the present disclosure may be implemented in a different specific form without changing the technical spirit or essential characteristics thereof. In this regard, it should be understood that the above embodiment is not limitative, but illustrative in all aspects. The scope of the disclosure is defined by the appended claims rather than by the description preceding them, and therefore all changes and modifications that fall within the metes and bounds of the claims, or equivalents of such metes and bounds are therefore intended to be embraced by the claims.

## Claims

1. A method of preparing a broth composition for retort foods, wherein aroma components and flavor are enhanced,
the method comprising a meat raw material pretreatment step (P);
a pressurized hot water extraction step (S30) of performing the pressurized hot water extraction of the meat raw material, which is pretreated in the pretreatment step (P), at a temperature of 90°C to 130°C for 1 hour to 4 hours; and
a centrifugation step (S40) of centrifuging the broth extracted in the pressurized hot water extraction step (S30), thereby separating and filtering meat residue and fat.

2. The method of claim 1, further comprising a retort heating step (S60) of packaging the centrifuged broth and sterilizing the same by retort heating, after the centrifugation step (S40).

3. The method of claim 2, wherein the retort-heated broth comprises a pyrazine type compound.

4. The method of claim 2, wherein the retort-heated broth has a ratio of bitter amino acids of less than 50% in the total content of taste amino acids.

5. The method of claim 2, wherein the retort-heated broth comprises a pyrazine type compound and has a ratio of bitter amino acids of less than 50% in the total content of taste amino acids.

6. The method of claim 1, wherein the pretreatment step (P) comprises a chopping step of chopping the meat raw material.

7. The method of claim 1, wherein the pretreatment step (P) does not comprise a blanching step or a bleeding step.

8. The method of claim 1, wherein the pressurized hot water extraction step (S30) is performed at a temperature of 110°C to 125°C.

9. The method of claim 1, wherein the pressurized hot water extraction step (S30) is performed at a pressure of 1.7 kgf/cm² to 2.3 kgf/cm².

10. The method of claim 1, wherein the pressurized hot water extraction step (S30) is performed for 2 hours to 3 hours.

11. The method of claim 1, wherein the centrifugation is performed using a three-phase centrifuge.

12. The method of claim 1, further comprising a homogenization step (S50) of mixing and heating the centrifuged broth with additives comprising a viscosity regulator, after the centrifugation step (S40).

13. The method of claim 12, wherein the homogenized broth has a salinity of 0% to 15% and a sugar content of 35 Brix to 60 Brix.

14. The method of claim 12, wherein the homogenization step (S50) is performed at a temperature of 80°C to 100°C.

15. The method of claim 12, wherein the homogenization step (S50) is performed for 10 minutes to 60 minutes.

16. A method of preparing a broth-based retort food, wherein aroma components and flavor are enhanced,
the method comprising a meat raw material pretreatment step;
a pressurized hot water extraction step of performing pressurized hot water extraction of the meat raw material, which is pretreated in the pretreatment step, at a temperature of 110°C to 130°C for 1 hour to 4 hours;
a centrifugation step of centrifuging the broth extracted in the pressurized hot water extraction step, thereby separating and filtering meat residue and fat; and
a retort heating step of packaging a retort food composition comprising the centrifuged broth and sterilizing the same by retort heating.

17. The method of claim 16, wherein the retort food composition comprising the centrifuged broth further comprises solid ingredients and purified water.

18. A broth composition for retort foods, wherein aroma components and flavor are enhanced, which is prepared by the method of preparing the broth composition for retort foods of any one of claims 1 to 17.

19. The broth composition for retort foods of claim 18, wherein the broth composition for retort foods comprises a pyrazine type compound.

20. The broth composition for retort foods of claim 18, wherein the broth composition for retort foods has a ratio of bitter amino acids of less than 50% in the total content of taste amino acids.
